# EUROPEAN PATENT SPECIFICATION

(11) **EP 4 570 468 B1**
(45) Date of publication and mention of the grant of the patent: **03.06.2026**
(21) Application number: 24151967.7
(22) Date of filing: 15.01.2024
(51) Int. Cl.: B29C 48/00, B29C 48/41, B29B 17/00, C08J 5/18, B29B 17/04, B29L 7/00, B29L 31/00, B29K 23/00, B29K 105/26, B29K 505/00, B29K 505/02, B29C 43/02, B29C 43/00, B29C 43/34

(54) **PROCESSES FOR RECYCLING PLASTIC LAMINATE WASTE**
VERFAHREN ZUR WIEDERVERWERTUNG VON KUNSTSTOFFLAMINATABFÄLLEN
PROCÉDÉS DE RECYCLAGE DE DÉCHETS DE STRATIFIÉ PLASTIQUE

(30) Priority: 17.12.2023 IL 30946223
(43) Date of publication of application: 18.06.2025
(73) Proprietor: Roded Recycling Industries Ltd, 7179902 Modi'in-Macabim-Reut (IL); Genie Ventures, LLC, Newark, NJ 07102 (US)
(72) Inventor: STEIN, Michael, 9242220 Jerusalem (IL); WEISBERGER, Petachia, 6993725 Tel Aviv (IL); MANOR MANSOUR, Eitan, 7179902 Modi'in-Makkabbim-Reut (IL)
(74) Representative: Plasseraud IP

(56) References cited:
- EP-A1- 2 463 071
- EP-A1- 3 222 657
- EP-A1- 4 134 218

## Description

### TECHNOLOGICAL FIELD

The present disclosure concerns processes for recycling laminate waste without the need to separate the laminate into its components. More specifically, the disclosure concerns processes for utilizing laminate waste together with agri-plastic waste, such as polyethylene and/or polypropylene sheets, to produce final products.

### BACKGROUND

Recycling processes of low melt flow index (MFI) plastic waste has proven to be difficult in conventional processes. Over 40% of agri-plastic originates from plastic sheets made predominantly of polyethylene, that are spread over soil, for mulching, or used as temporary structures (e.g. greenhouses). Such plastic sheets have thus far been proven difficult to recycle, typically due to their extremely low MFI, making them problematic to treated in standard extrusion-based recycling processes.

Hence, such plastic waste is typically burned-off. Alternatively, the sheets are sent to landfills, in which the sheets are left untreated, and can breakdown over time to microplastic particles that can be spread by wind to other soil or water areas causing microplastic contamination. Either way, as such plastic sheets have not been recycled thus far, these remain a significant environmental concern and hazard.

Polyethylene and polypropylene grades used for manufacture of such sheets are typically characterized by having low MFIs, which makes them harder to process in conventional melting and extruding recycling processes applied on other types of plastic wastes. Further, polyethylene and polypropylene utilized for producing such sheets contain various functional additives (such as UV blockers, mechanical properties modifiers, plasticizers, *etc.*), which have significant impact on the properties of the sheets and can hamper application of various recycling processes. Hence, up to date, attempts to recycle these sheets focused mainly on shredding the sheets (typically after a complex and expensive process of removing undesired contaminants), pelletizing and pressure forcing for forming granulate-based compressed products, typically having inferior mechanical properties.

Laminate plastic waste, such as food packaging, is also one of the less recycled wastes. Due to its multi-components structure, typically including at least one metallic layer, e.g. aluminum, laminated between plastic layers, laminate plastic waste is often excluded from plastic recycling process, as separation of the metal from the plastic is difficult and costly. EP4134218A discloses a process for producing molded plastic panels from agri-plastic waste.

### GENERAL DESCRIPTION

The present disclosure provides processes for integrating laminate plastic waste with agri-plastic waste. Applicant has surprisingly found that incorporation of laminate plastic waste into agri-plastic waste significantly increases the flow properties of the agri-plastic waste, thereby enabling processing the combined waste in extrusion processes. In the processes of this disclosure, no separation of the laminate waste into its components is required, thereby resulting in a cost-effective recycling process.

The plastic-metal laminate was unexpectedly found by Applicant to significantly increase the flow properties of the agri-plastic waste when mixed thereinto, thereby enabling improved processability by extrusion and molding of the agri-plastic waste, as will be further disclosed herein.

The present disclosure provides a process for producing molded plastic products, typically heavy-duty plastic products, from a mixture of agri-plastic waste and plastic-metal laminate waste, the molded plastic products comprise a polymeric matrix and metal particles distributed therein.

According to an aspect of this disclosure, there is provided a process for producing molded plastic products, the process comprises mixing agglomerated granules of agri-plastic waste and agglomerated granules of plastic-metal laminate waste to form a mixture; processing the mixture in a double-helix extruder to obtain a melt mixture; permitting the melt mixture to flow into one or more molds to at least partially fill the one or more molds; applying pressure onto the one or more molds to shape the melt mixture into one or more of shaped plastic products; and extracting the one or more shaped plastic products from the one or molds to obtain the molded plastic products.

By some embodiments, the mixture has a melt mass-flow rate (MFR) of at least 2-folds compared to the MFR of the agri-plastic waste. In other words, when in melt form, the mixture of agri-plastic waste and the laminate waste has an MFR value that is higher in at least 100%, at times at least 200% or even 300% compared to the MFR value of a melt of the agri-plastic waste without addition of the laminate.

The term *melt mass-flow rate (MFR)* is a measure denoting the ease of flow of a polymer melt under defined conditions. Namely, the lower the MFR value, the less flowable the polymer melt is. Unless otherwise specifically indicated, the MFR values provided herein are measured according to ISO 1133-1 international standard (measured at 190°C).

By some embodiments, the mixture has an MFR value of at least about 3 g/10min (measured at 190°C).

In the context of the present disclosure, the term *recycling* (or any lingual variation thereof) means to denote transformation of the plastic waste and/or plastic-metal laminate waste into a different physical form, having different mechanical properties than those of the waste prior to application of the process. In other words, the process of this disclosure applies a combination of steps and conditions, transforming waste, e.g. agri-plastic waste and plastic-metal laminates, into molded plastic products.

According to some embodiments, the products are heavy-duty molded products, *e.g.* heavy-duty panels. *Heavy-duty products* are products which are designed to withstand relatively large mechanical loads, typically compression forces, making them suitable for applications where large mechanical loads are expected to be applied, singularly, continuously or repeatedly, for example industrial floor boards/panels, loading or shipment pallets, *etc.*

Within the context of the present disclosure, the term *agri-plastic waste* refers to plastic sheets, pipes, tubes, *etc.,* utilized in agriculture, such as irrigation tubes, mulching plastic sheets, greenhouse plastic sheets, *etc.*

*Plastic sheets,* as used herein, are thin, pliable films of plastic, typically having a thickness of at most 20 micrometers (µm) (*e.g*. between about 5 and about 20 µm). By some embodiments, the plastic sheets are agri-plastic sheets. The term *plastic* means to denote a material or composition of matter, containing predominantly one or more polymers. The sheets can be single-layer, monolithic sheets *(i.e.* single layer made from a singular material or singular composition of matter), or can be a multilayer sheet.

The term *polymer* means to denote an organic macromolecule molecule constructed out of repeating structural units (building blocks). The term includes homopolymers, copolymers, such as for example, block, graft, random and alternating copolymers as well as terpolymers, further including their derivatives, combinations and blends thereof. In addition to the above the term includes all geometrical configurations of such structures including linear, block, graft, random, alternating, branched structures, and combination thereof. The term *block copolymer* is meant to encompass a polymer formed from two or more homo-polymer subunits (blocks) linearly linked by chemical bonds (i.e. the blocks are connected end-to-end). Block copolymers with two, three, four and multiple homo-polymer units are referred to as di-block, tri-block, tetra-blocks and multi-blocks respectively. The number of monomer types in a block co-polymer may be less than or equal to the number of blocks. Thus, an ABC linear tri-block consists of three monomer types, whereas an ABA linear tri-block consists of two monomer types.

Typically, the agri-plastic waste, e.g. the plastic sheets, are made of one or more thermoplastic polymers, *i.e.* one or more polymers which are heat processable. By some embodiments, the agri-plastic waste comprises (or is predominantly made of) polyethylene, polypropylene or any mixture, blend or copolymer thereof. According to other embodiments, the agri-plastic waste, *e.g*. plastic sheets, comprises (or is predominantly made of) low-density polyethylene (LDPE), linear low-density polyethylene (LLDPE), high-density polyethylene (HDPE), low-density polypropylene (LDPP) or high-density polypropylene (HDPP), or any mixture, blend or copolymer thereof.

The phrase *predominantly made of* plastic means to denote agri-plastic waste having the majority components thereof being made of plastic. By some embodiments, the agri-plastic waste comprises at least 85 wt% of plastic, *e.g.* at least 90 wt%, at least 92 wt% or even at least 95 wt% of plastic.

According to some embodiments, the agri-plastic waste further comprises, or is further mixed with, high-density polyethylene (HDPE) in the form of pipes or tubes.

By preferred embodiments, the agri-plastic waste comprises LDPE and HDPE. In such embodiments, the agri-plastic waste comprises LDPE and HDPE in a weight ratio of LDPE to HDPE of between about 40:60 and about 60:40.

While polymers are the main components of the agri-plastic waste, the agri-plastic waste can comprise a variety of additives, such as UV blockers, pigments, antioxidants, plasticizers, stabilizers, fillers, *etc.*

As noted, the plastic waste are typically agri-plastic sheets, and are collected after use from the field. Therefore, the waste typically can comprise various contaminants in particulate form, such as dust, soil, gravel, *etc.* By some embodiments, the agri-plastic waste comprises up to 15 wt% of non-organic particulate matter (in other words, up to 15 wt% of non-organic matter which are carried by the agri-plastic sheets). By other embodiments, the plastic waste comprises between about 0.5 wt% and 10 wt% of non-organic particulate matter (out of the total weight of the plastic waste).

*Plastic-metal laminate(s)* (or polymer-metal laminate) mean to denote a thin layered sheet, typically flexible or pliable, that comprises at least one metal layer (*e.g.* aluminum foil) sandwiched between at least two layers of one or more polymers. The laminate is typically 50-300 micrometers (µm) thick. The polymeric layers can be made of any one of polyethylene, polypropylene, polyester, nylon, polylactic acid, polyglycolic acid, cellulose, polyethylene terephthalate (PET), polybutylene adipate terephthalate (BPAT), ethylene-vinyl alcohol copolymer (EVOH), *etc.*

According to some embodiments, the laminate is a polyethylene-aluminum-polyester laminate.

It was surprisingly found by Applicant that the presence of aluminum particles in the mixture not only provides improved mechanical properties to the final molded product, but also, without wishing to be bound by theory, assists in increasing the flowability of the melt mixture through the extruder.

The laminate waste can be, for example, food packages, coffee capsules, packaging cover-foils, antistatic packaging, *etc.,* as well as laminate cut-offs or rejects from production lines of such products.

According to some embodiments, the weight ratio of said agglomerated granules of agri-plastic waste to said agglomerated granules of plastic-metal laminate waste in the mixture is between about 85:15 and about 50:50. According to other embodiments, the weight ratio of said agglomerated granules of agri-plastic waste to said agglomerated granules of plastic-metal laminate waste in the mixture is between about 80:20 and about 60:40.

In the process of this disclosure, a mixture of agglomerated granules of the agri-plastic waste and agglomerates of the plastic-metal laminate are typically fed into the extruder. The agglomerated granules can be obtained by granulating particulate matter formed from said agri-plastic and/or laminate waste. The agglomeration process typically comprises application of sheering forces onto the waste, in order to further reduce its size and obtain a relatively uniform size distribution of the agglomerates.

Therefore, according to some embodiments, the process comprises forming said agglomerated granules of agri-plastic waste from agri-plastic in the form of particulate matter. By some such embodiments, the process may comprise processing agri-plastic waste in the form of sheets into said particulate matter prior to forming said granules.

In other words, agri-plastic waste, e.g. in the form of agri-plastic sheets, is first processed into particulate matter in order to reduce its size. Reduction of size can be carried out by any suitable means, for example by cutting, shredding, flaking, *etc.,* thereby obtaining small pieces, typically flakes, cuttings, shreddings, or any other form of particulate matter. By some embodiments, the agri-plastic particulate matter has an average flake size of no more than about 80 millimeters (mm), e.g. between about 10 mm and about 80 mm.

The term *average size* refers to the arithmetic mean of measured diameters, wherein the diameters range ±25% of the mean when the flakes are approximately circular. In case the flakes are of non-circular or of irregular form, the term means to refer to the equivalent diameter, *i.e.* the longest linear dimension of the flake (*e.g.* width or length).

Similarly, the plastic-metal laminate is agglomerated into granules prior to mixing with the agri-plastic waste granules.

Agglomeration can be carried out by any suitable technique, for example by wet agglomeration, thus obtaining substantially homogenous agglomerated granules, typically having an average particle size of between about 5 mm and about 50 mm. Agglomeration is carried out to provide a relatively homogenous granule size and composition, as well as assist in diminishing the size of the particles of the non-organic components present in the waste and assist their distribution in the material.

The waste can, at times, be provided moist or carry some water or moisture. Further, the agglomeration step can be carried out in the presence of water, and hence the agglomerates may contain some residual water. Thus, by some embodiments, the process can comprise drying the agglomerated granules before mixing, e.g. to a water content that does not exceed about 5% wt in the agglomerated granules before mixing. By some other embodiments, the process comprises drying the mixture before feeding into the extruder, *e.g.* to a water content that does not exceed about 5% wt.

By some embodiments, the agglomerated granules are sieved prior to mixing or before introduction into the extruder, for example to limit the granules to a size of no more than about 50 mm.

In the process of this disclosure, the mixture is fed to a double-helix extruder, in which it is processed under conditions permitting obtaining a melt mixture, comprising a polymeric matrix and metal particles distributed therein. Extrusion processes typically involve melting of the polymeric components in the mixture, often under application of elevated temperatures and shearing conditions, and then force-flowing the melt mixture through an outlet die. As noted, as the polymers from which the agri-plastic sheets are typically made, e.g. polyethylene/polypropylene, have low flowability properties, these are typically hard to process under regular extrusion conditions. Thus, in the processes of this disclosure, the addition of the laminate provides a melt mixture having increased flow *(i.e.* a higher MFR value), and are hence processable in a double-helix extruder, in which the agglomerated granules can be exposed to high shear forces, higher than common extrusion processes. The *double helix* extruder includes two, oppositely rotating, helical shafts *(i.e.* extrusion screws), that apply shearing forces onto the plastic material fed thereinto, and continuously advance the material forward as it melts (due to elevated temperatures developing within the material during its shearing, as well as external heating).

As the high shear forces cause generation of heat within the extruder, external heating can be minimized, thus contributing to reducing of overall energy that need to be invested in the process. Thus, by some embodiments, the conditions permitting obtaining said melt mixture comprises heating the granules' mixture before and/or during feeding into the extruder. According to some embodiments, the temperature of the mixture upon entry to the extruder (namely the inlet temperature) is between about 40 °C and about 70 °C.

By some embodiments, the extrusion is carried out at a temperature of between about 180 °C and about 240 °C, *e.g.* at a temperature sufficient to melt the polymers however significantly lower than the melting temperature of the metal particles originating from in the laminate granules.

The extrusion step permits obtaining processed melt mixture. The term *melt* or *melt form,* used interchangeably, refers to a physical state of the polymers which is between a solid state and a liquid state, substantially without requiring addition solvent(s) or plasticizer(s).

By some embodiments, the process further comprising adding one or more fillers into the double-helix extruder during extrusion, typically in an amount of at most 10 wt% out of the total weight of the melt mixture. The one or more fillers can provide reinforcement of the plastic for obtaining improved mechanical properties.

By some embodiments, the one or more fillers can be selected from talc, coal ash (or fly ash), silicates, aluminates and mixtures thereof. By other embodiments, the said one or more fillers is selected from talc, fly ash, silica and alumina and mixtures thereof. By some other embodiments, the filler can be talc, fly ash or mixtures thereof.

The melt mixture is then permitted to flow into one or more molds, at least partially filling the molds. By some embodiments, the melt mixture is permitted to free-flow from the extruder into said one or more molds - in other words, the melt mixture is fed into the molds gravitationally, without applying forced feeding.

Alternatively, and preferably, the melt mixture is fed under pressure into said one or more molds. By some embodiments, the melt mixture can be collected into one or more magazines, typically heated magazines in order to maintain the melt in pliable form, and fed, under pressure, into the one or more molds from the magazines. According to some embodiments, the melt mixture is alternatingly fed into the magazines *(i.e.* fed into a first magazine, then into a second magazine, then into the first magazine, and so forth), and alternatingly or selectively fed into the one or more molds from said one or more magazines. Said selective or alternating feeding of melt mixture from the magazines into the one or more molds can be controlled by one or more flow valves.

Once within the mold, pressure is applied onto the mold to mold-shape the plastic mixture into one or more shaped molded products. By some embodiments, a pressure of at least about 60 ton/kg *(i.e.* 60 tons per kilogram of plastic mixture fed into the mold) is applied in order to obtain the products. By some embodiments, the pressure applied onto the mold can be in the range of between about 60 ton/kg and 100 ton/kg. Pressure is applied by any suitable press known *per se,* for example a hydraulic press, and the mold is held under pressure for a sufficient time to permit flow of the melt mixture within the mold. For example, pressure can be applied for at least about 20 seconds (e.g. between about 20 and about 60 seconds). By other embodiments, the melt mixture resides within the mold for a period of time of between about 20 seconds and about 120 seconds before extraction.

Pressure can also be applied according to a pre-determined profile, e.g. various pressures can be applied during application of a pressing cycle, depending on the viscosity and/or flow properties of the melt, and the complexity of the mold.

According to some embodiments, the molded plastic products are heavy duty panels. In such embodiments, the mold can comprise a bottom mold plate and a top mold plate configured for holding, and defining between them a space corresponding to the shape of the desired panel. Flowing the melt mixture into the mold plates and application of pressure thus shapes the melt mixture between the plates into the shape of the desired panel.

By some embodiments, the melt mixture is distributed within the mold at several locations within the mold, or is fed simultaneously to different locations in the mold. Distribution of the melt mixture within the mold before application of pressure ensures complete filling of the mold when pressure is applied. For this purpose, according to some embodiments, the mold may comprise two or more mold inlets (*e.g.* 2, 3, 4, 5, 6, 7, 8 or even more inlets), for feeding the melt mixture into the mold in at least two different locations.

According to other embodiments, the mold may comprise a channeling arrangement, associated with one or both of the top mold plate and the bottom mold plate. The channeling arrangement comprises at least one feed inlet and two or more channels in fluid-communication with said at least two mold inlets for receiving the melt mixture and feeding it through the channels to the more mold inlets configured at said top mold plate and/or bottom mold plate. Hence, the channeling arrangement functions as a manifold for distributing the melt mixture within the mold.

By some embodiments, during application of pressure, the top mold plate is maintained at a temperature lower than that of the bottom mold plate.

Maintaining a temperature difference between the mold plates allows the top surface of the panel *(i.e.* corresponding to the top mold plate) to solidify or stabilize before the bottom face of the panel *(i.e.* corresponding to the bottom mold plate). Applicant has found that due to the limited flexibility of the panels and the relatively large size (and/or weight) of the panel, it is preferable to extract *(i.e.* peel-off) the panel from the top plate rather than extracting the panel that is at least partially embedded within the cavity of the bottom mold plate. Thus, by some embodiments, extracting comprises detaching the top mold plate from the bottom mold plate, followed by detaching the heavy-duty plastic panels from the top mold plate. The temperature difference between the top mold plate and the bottom mold plate can, by some embodiments, be at least about 25 °C. By some embodiments, the heavy-duty panel is extracted from the top mold plate at a temperature of between about 60 and about 90°C.

The process of this disclosure can be a continuous process, a semi-continuous process or batch-wise process. Preferably, the process is continuous.

Compared to production processes of standard heavy-duty panels, e.g. wooden panels (or pallets) or plastic panels weighing 25 Kg produced by standard injection molding techniques, the processes of this disclosure are favorable economically, as well as characterized in low CO₂ emission values (e.g. reduction of about 50% of CO₂ emission compared to production process of standard wooden pallets and more than about 55% reduction of CO₂ emission compared to production of plastic pallets by injection molding).

According to another aspect, there is provided a molded plastic product obtained by the process described herein, the product comprises a polymeric matrix and metal particles distributed in said polymeric matrix.

By another one of its aspects, the present disclosure provides a heavy-duty plastic panel manufactured by a proceed as disclosed herein.

By yet another aspect, there is provided a cargo pallet manufactured by a proceed as disclosed herein.

As used herein, the singular form "*a*", "*an*" and *"the"* include plural references unless the context clearly dictates otherwise.

As used herein, the term *about* is meant to encompass deviation of ±10% from the specifically mentioned value of a parameter, such as temperature, pressure, concentration, etc.

Whenever a numerical range is indicated herein, it is meant to include any cited numeral (fractional or integral) within the indicated range. The phrases *ranging*/*ranges between* a first indicate number and a second indicate number and "ranging/ranges from" a first indicate number "to" a second indicate number are used herein interchangeably and are meant to include the first and second indicated numbers and all the fractional and integral numerals therebetween.

Throughout this specification and the claims which follow, unless the context requires otherwise, the word *comprise,* and variations such as *"comprises"* and *"comprising",* will be understood to imply the inclusion of a stated integer or step or group of integers or steps but not the exclusion of any integer or step or group of integers and steps.

Generally it is noted that the term *"...at least one...* " as applied to any component of the processes or products of this disclosure should be read to encompass one, two, three, four, five, six, seven, eight, nine or ten different occurrences of said component in the process or product.

It is appreciated that certain features of the disclosure which are, for clarity, described in the context of separate embodiments, may also be provided in combination in a single embodiment. Conversely, various features of the disclosure which are, for brevity, described in the context of a single embodiment, may also be provided separately or in any suitable sub-combination or as suitable in any other described embodiment of this disclosure.

It is also appreciated that the *processes* of the present disclosure involve numerous process steps which may or may not be associated with other common physical-chemical processes so as to achieve the desired product. Unless otherwise indicated, such process steps, if present, may be set in different sequences without affecting the workability of the process and its efficacy in achieving the desired end result. As a person skilled in the art would appreciate, a sequence of steps may be employed and changed depending on various economical aspects, material availability, environmental considerations, etc., without substantially departing from the processes described herein.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** shows a schematic representation of a process according to an embodiment of this disclosure.
**Fig. 2** shows a schematic representation of a process according to another embodiment of this disclosure.
**Fig. 3** shows a schematic representation of a process according to a further embodiment of this disclosure.
**Fig. 4** shows an exemplary mold for producing a heavy-duty panel according to an exemplary embodiment of this disclosure.

### DETAILED DESCRIPTION OF EMBODIMENTS

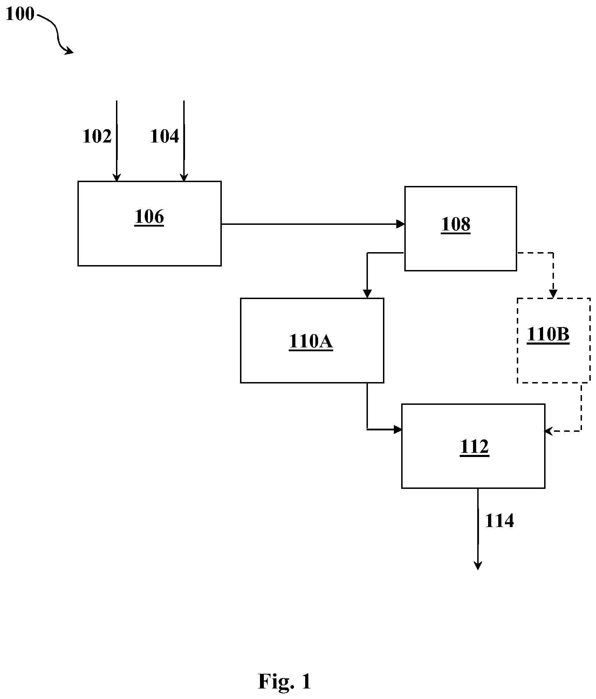

A schematic description of a process and a manufacturing facility according to an embodiment of this disclosure is shown in Fig. 1. In the process of Fig. 1, dashed lines represent optional process steps.

Facility **100** includes mixing unit **106,** which is configured to receive a feed **102** of agglomerated agri-plastic waste **102,** such as polyethylene and/or polypropylene, and agglomerated plastic-metal laminate waste **104.** The mixture is then fed into double-helix extruder **108.** In the extruder, the mixture undergo high shearing and high temperature conditions, slowly melting the agglomerates as the material advances along the extruder. The double-helix extruder permits development of high shear forces, higher than forces developing in standard extruders (for example single screw extruder), and hence also enables development of higher temperatures within the extruded material at relatively quicker rates. Thus, the utilization of the double helix extruder enables obtaining relatively efficient melting of the agglomerates at a relatively quick rate.

As the melt mixture is allowed to flow out of extruder **108** and collected into one or more magazines **110A, 110B,** *e.g.* by vacuum, and fed from the magazines into the molding unit **112** under pressure. Magazine(s) **110** is(are) typically kept at elevated temperatures in order to prevent hardening of the melt mixture. In **112,** the melt is fed into molds and pressed under the desired conditions in order to obtain the heavy-duty panels once extracted **(114).**

When more than one magazine **110** is utilized to temporarily store the melt mixture, feeding of the melt mixture from the magazines into the molds can be carrying out alternatingly *(i.e.* feeding from a first magazine, then from a second magazine, *etc.*)*,* or selectively. Utilization of more than one magazine can reduce the cycle time for manufacturing a heavy-duty panel, as the magazines can be filled and emptied in a sequence according to the pressing rate of the press unit. In other words, utilizing two or more magazines can permit emptying one of the magazines into the mold, while concomitantly filling the other magazine, thereby rendering the other magazine ready for emptying in the next pressing cycle, and so on.

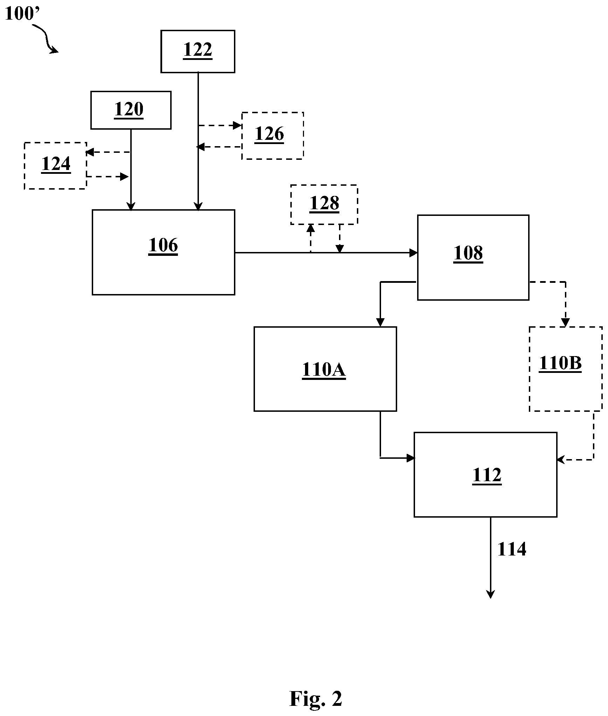

A variation of the process, according to another embodiment, is shown in Fig. 2. Facility **100'** includes, in addition to the elements of facility **100,** agri-plastic waste agglomeration unit **120** and laminate agglomeration unit **122,** in which agri-plastic waste and laminate waste are agglomerated, respectively, for obtaining agglomerated granules of average size ranging, for example, between about 5 mm and 50 mm. As the waste can be provided with a high moisture content, or the agglomeration may be carried out in wet agglomerators, the granules can be treated in dry treatment units **124** and **126,** entering into mixer **106.** Alternatively, or additionally, drying of the mixture can be carried out by drier **128** before introducing the mixture into the extruder **108.** Typically, the agglomerates and/or mixture are dried to reduce their moisture content to below about 5 wt% before feeding into extruder **108.**

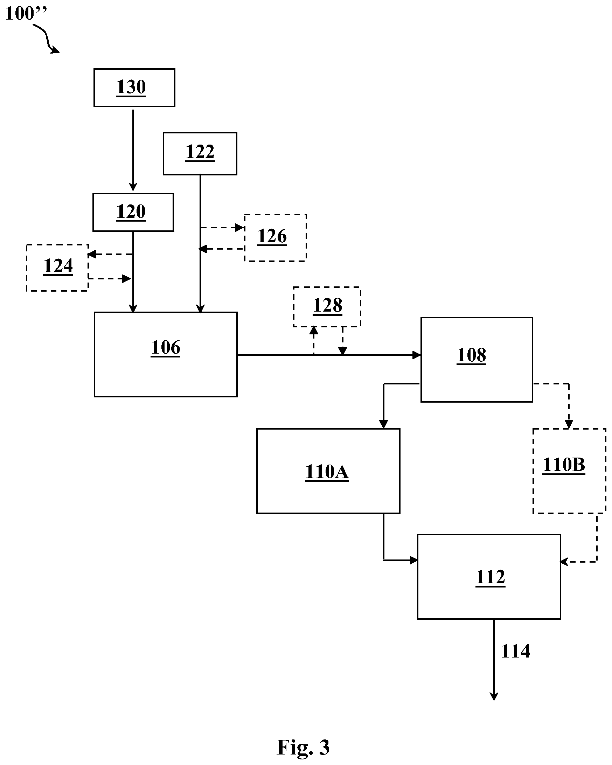

Another variation of the process, according to another embodiment, is shown in Fig. 3. Facility **100",** in addition to the elements of facility **100'**, includes shredding unit **130,** which is configured to receive agri-plastic waste, e.g. in the form of sheets (with or without addition of HDPE tubes or pipes). Shredding unit **130** shreds the agri-plastic waste into shreddings or flakes, typically with a size ranging between about 10 mm and 80 mm. The flakes are fed into agglomeration unit **120.**

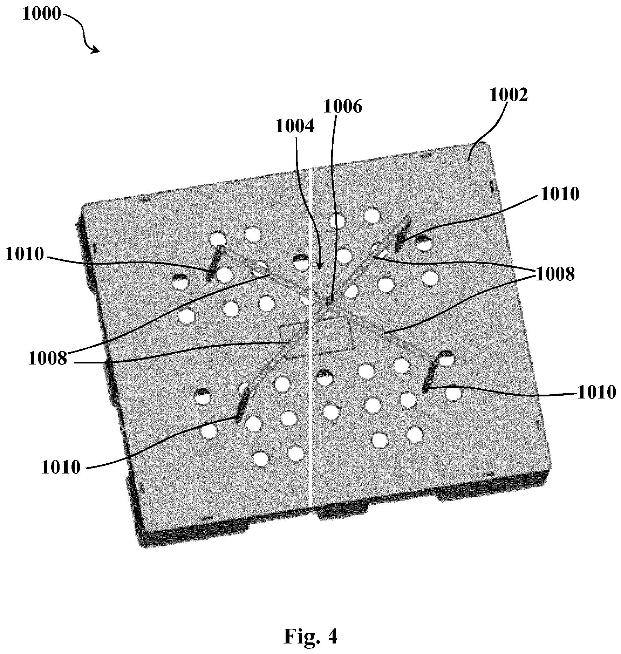

An exemplary mold for obtaining the heavy-duty panel is shown in Fig. 4. Exemplary mold **1000** is configured for receiving the melt mixture and distributing it within the mold via two or more mold inlets. Distribution of the feed of the melt mixture through several mold inlets permits more effective and efficient filling of the mold at a relatively fast rate that is suitable for mass production of the heavy-duty plates. In the provided example, the top mold plate **1002** of mold **1000** is associated with a channeling arrangement, generally designated **1004.** It is, however, to be understood that channeling arrangement **1004** may be associated with the bottom mold plate or with both of the top and bottom mold plates (not shown). The channeling arrangement **1004** includes a feed inlet **1006** and a plurality of channels **1008** (four channels in this specific example). The channels **1008** are defined between the feed inlet **1006** and mold inlets **1010,** such that melt mixture can be received through feed inlet, typically under suitable pressure feed, and channeled through channels **1008** to mold inlets **1010,** thereby filling the mold, substantially simultaneously, through all of the mold inlets, thereby distributing the melt mixture in different locations in the mold. Such distribution within the mold enables to shorten the pressing cycle time, as well as obtaining an even distribution of residual stresses formed in the heavy-duty panel during pressing and after release of pressure.

### Flow characterization of melt mixtures

Mixture of agglomerated granules of agri-plastic (obtained from shredding and agglomeration of LDPE) and agglomerated granules of plastic-metal laminate waste (polyethylene-aluminum-polyester laminate) were extruded in a double helix extruder at about 220°C. The MFR of the melt mixture was tested in a melt flow indexer according to ISO 1133-1 at 190°C, 2.6 kg weight. The test results are provided in **Table 1.**

**Table 1: MFR test results for melt mixtures**

| **Test no.** | **Composition** | **MFR value** |
|---|---|---|
| Ref. 1 | LDPE | ~2 |
| Comp. 1 | 30-50 wt% LDPE + 50-70 wt% Laminate | 10.7 |
| Comp. 2 | 30-50 wt% LDPE + 50-70 wt% Laminate | 9.4 |
| Comp. 3 | 30-50 wt% LDPE + 50-70 wt% Laminate | 11.6 |
| Comp. 4 | 30-50 wt% LDPE + 50-70 wt% Laminate | 11.8 |
| Comp. 5 | 30-50 wt% LDPE + 50-70 wt% Laminate | 14.4 |

As can be seen, addition of the laminate into the composition of the melt mixture significantly increased the MFR values of the mixture, hence significantly improving the flow properties of the mixture. As the melt mixture is fed into molds of various geometries, a high flow index is desired in order to enable homogenous filling of the molds within 20-30 seconds, without forming inhomogeneities and/or voids within the mold. Addition of the laminate waste into the agri-plastic waste has shown to increase the MFR values by at least 4-folds compared to the agri-plastic waste without such addition, making such melt mixtures particularly applicable in molding of large-scale products.

## Claims

1. A process for producing molded plastic products, said molded plastic products comprising a polymeric matrix and aluminum particles distributed in said polymeric matrix, the process comprising:
mixing agglomerated granules of agri-plastic waste and agglomerated granules of plastic-aluminum laminate waste to form a mixture;
processing said mixture in a double-helix extruder obtaining a melt mixture,
permitting the melt mixture to flow into one or more molds to at least partially fill said one or more molds,
applying pressure onto said one or more molds to shape the melt mixture into one or more of shaped plastic products, and
extracting said one or more shaped plastic products from said one or molds to obtain said molded plastic products.

2. The process of claim 1, wherein the mixture has a melt mass-flow rate (MFR) of at least 2-folds compared to the MFR of the agri-plastic waste.

3. The process of claim 1 or 2, wherein said mixture has an MFR value of at least about 3 g/10min, as measured according to ISO 1133-1 international standard at 190°C , and wherein the term "about" is meant to encompass deviation of ± 10% from the specifically mentioned value of the parameter.

4. The process of any one of claims 1 to 3, wherein the pressure applied onto said one or more molds is at least about 60 ton/kg. , and wherein the term "about" is meant to encompass deviation of ± 10% from the specifically mentioned value of the parameter.

5. The process of any one of claims 1 to 4, wherein said agri-plastic waste comprise polyethylene, polypropylene, or a mixture thereof, optionally wherein said agri-plastic plastic waste comprise low-density polyethylene (LDPE), linear low-density polyethylene (LLDPE), high-density polyethylene (HDPE), low-density polypropylene (LDPP) or high-density polypropylene (HDPP), or any mixture, blend or copolymer thereof.

6. The process of claim 5, wherein said agri-plastic waste is in the form of flexible sheets, optionally wherein said agri-plastic waste further comprises high-density polyethylene (HDPE) pipes or tubes.

7. The process of claim 5 or 6, wherein said agri-plastic waste comprises LDPE and HDPE in a weight ratio of LDPE to HDPE of between about 40:60 and about 60:40. , and wherein the term "about" is meant to encompass deviation of ± 10% from the specifically mentioned value of the parameter.

8. The process of any one of claims 1 to 7, wherein the weight ratio of said agglomerated granules of agri-plastic waste to said agglomerated granules of plastic-aluminum laminate waste in the mixture is between about 85:15 and about 50:50, optionally wherein the weight ratio of said agglomerated granules of agri-plastic waste to said agglomerated granules of plastic-aluminum laminate waste in the mixture is between about 80:20 and about 60:40, and wherein the term "about" is meant to encompass deviation of ± 10% from the specifically value of the parameter.

9. The process of any one of claims 1 to 8, further comprising adding one or more fillers into the double-helix extruder during extrusion, optionally wherein said one or more fillers are added in an amount of at most 10 wt% out of the total weight of the melt mixture, and wherein the term "about" is meant to encompass deviation of ± 10% from the specifically mentioned value of the parameter.

10. The process of any one of claims 1 to 9, comprising, prior to said mixing, forming said agglomerated granules of agri-plastic waste from agri-plastic in the form of particulate matter, optionally wherein the process further comprises processing said agri-plastic waste in the form of sheets into said particulate matter prior to forming said granules, preferably wherein the particulate matter of agri-plastic waste having an average flake size of no more than about 80 mm, and wherein the term "about" is meant to encompass deviation of ± 10% from the specifically mentioned value of the parameter.

11. The process of any one of claims 1 to 10, comprising, prior to said processing, forming said agglomerated granules of plastic-aluminum laminate waste.

12. The process of any one of claims 1 to 11, comprising drying the agglomerated granules of agri-plastic waste and the agglomerated granules of plastic-aluminum laminate waste before said mixing, optionally wherein the water content in the agglomerated granules of the agri-plastic waste and the agglomerated granules of plastic-aluminum laminate waste do not exceed about 5% wt before mixing. , and wherein the term "about" is meant to encompass deviation of ± 10% from the specifically mentioned value of the parameter.

13. The process of any one of claims 1 to 12, comprising drying the mixture before feeding into the extruder, optionally wherein the water content in the mixture does not exceed about 5% wt before feeding into the extruder. , and wherein the term "about" is meant to encompass deviation of ± 10% from the specifically mentioned value of the parameter.

14. The process of any one of claims 1 to 13, wherein the melt mixture is permitted to flow into the mold at several locations defined within the mold, the mold comprises two or more mold inlets configured for feeding the melt mixture into the mold in at least two different locations, optionally wherein the mold is associated with a channeling arrangement for channeling the melt mixture into the mold.

15. The process of any one of claims 1 to 14, wherein the molded plastic products are heavy duty panels, optionally wherein said one or more molds comprise a bottom mold plate and a top mold plate configured for holding and shaping between them said melt mixture, and wherein during said application of pressure the top mold plate being maintained at a temperature lower than that of the bottom mold plate.

16. The process of any one of claims 1 to 15, wherein said agri-plastic waste comprises up to 15 wt% of non-organic particulate matter out of the total weight of the agri-plastic waste.

17. The process of claim 16, wherein said agri-plastic waste comprises between about 0.5 wt% and about 10 wt% of non-organic particulate matter out of the total weight of the agri-plastic waste.

## Patentansprüche

1. Verfahren zum Herstellen geformter Kunststoffprodukte, wobei die geformten Kunststoffprodukte eine Polymermatrix und Aluminiumpartikel umfassen, welche in der Polymermatrix verteilt sind, wobei das Verfahren umfasst:
Mischen agglomerierten Granulats aus Agrarkunststoffabfall und agglomerierten Granulats aus Kunststoff-Aluminium-Laminatabfall, um eine Mischung zu bilden;
Verarbeiten der Mischung in einem Doppelhelix-Extruder, um eine Schmelzmischung zu erhalten,
Ermöglichen, dass die Mischung in eine oder mehrere Formen fließt, um die eine oder die mehreren Formen wenigstens teilweise zu füllen,
Ausüben eines Drucks auf die eine oder die mehreren Formen, um die Schmelzmischung in eine oder mehrere ausgeformte Kunststoffprodukte auszuformen, und
Extrahieren des einen oder der mehreren ausgeformten Kunststoffprodukte aus der einen oder Formen, um die geformten Kunststoffprodukte zu erhalten.

2. Verfahren nach Anspruch 1, wobei die Mischung eine Schmelze-Massendurchflussrate (MFR) von wenigstens dem 2-fachen im Vergleich zu der MFR des Agrarkunststoffabfalls aufweist.

3. Verfahren nach Anspruch 1 oder 2, wobei die Mischung einen MFR-Wert von wenigstens ungefähr 3 g/10min aufweist, gemessen gemäß ISO 1133-1 internationalem Standard bei 190 °C, und wobei der Begriff "ungefähr" bedeutet, dass eine Abweichung von ± 10% von dem explizit genannten Wert des Parameters umfasst ist.

4. Verfahren nach einem der Ansprüche 1 bis 3, wobei der Druck, welche auf die eine oder die mehreren Formen ausgeübt wird, wenigstens ungefähr 60 Tonnen/kg beträgt, und wobei der Begriff "ungefähr" bedeutet, dass eine Abweichung von ± 10% von dem explizit genannten Wert des Parameters umfasst ist.

5. Verfahren nach einem der Ansprüche 1 bis 4, wobei der Agrarkunststoffabfall Polyethylen, Polypropylen oder eine Mischung davon umfasst, optional wobei der Agrarkunststoffabfall niedrigdichtes Polyethylen (LDPE), lineares niedrigdichtes Polyethylen (LLDPE), hochdichtes Polyethylen (HDPE), niedrigdichtes Polypropylen (LDPP) oder hochdichtes Polypropylen (HDPP) oder eine jegliche Mischung, Gemisch oder Copolymer davon umfasst.

6. Verfahren nach Anspruch 5, wobei der Agrarkunststoffabfall in der Form flexibler Bahnen vorliegt, optional wobei der Agrarkunststoffabfall ferner hochdichte Polyethylen-(HDPE)-Rohre oder -Schläuche umfasst.

7. Verfahren nach Anspruch 5 oder 6, wobei der Agrarkunststoffabfall LDPE und HDPE in einem Gewichtsverhältnis von LDPE zu HDPE zwischen ungefähr 40:60 und ungefähr 60:40 umfasst, und wobei der Begriff "ungefähr" bedeutet, dass eine Abweichung von ± 10% von dem explizit genannten Wert des Parameters umfasst ist.

8. Verfahren nach einem der Ansprüche 1 bis 7, wobei das Gewichtsverhältnis aus dem agglomerierten Granulat des Agrarkunststoffabfalls zu dem agglomerierten Granulat des Kunststoff-Aluminium-Laminatabfalls in der Mischung zwischen ungefähr 85:15 und ungefähr 50:50 beträgt, optional wobei das Gewichtsverhältnis aus dem agglomerierten Granulat des Agrarkunststoffabfalls zu dem agglomerierten Granulat des Kunststoff-Aluminium-Laminatabfalls in der Mischung zwischen ungefähr 80:20 und ungefähr 60:40 beträgt, und wobei der Begriff "ungefähr" bedeutet, dass eine Abweichung von ± 10% von dem explizit genannten Wert des Parameters umfasst ist.

9. Verfahren nach einem der Ansprüche 1 bis 8, ferner umfassend ein Hinzufügen eines oder mehrere Füllmaterialien in den Doppelhelix-Extruder während einer Extrusion, optional wobei das eine oder die mehreren Füllmaterialien mit einer Menge von höchstens 10 Gew.-% des Gesamtgewichts der Schmelzmischung hinzugefügt werden, und wobei der Begriff "ungefähr" bedeutet, dass eine Abweichung von ± 10% von dem explizit genannten Wert des Parameters umfasst ist.

10. Verfahren nach einem der Ansprüche 1 bis 9, umfassend, vor dem Mischen, ein Bilden des agglomerierten Granulats aus Agrarkunststoffabfall von Agrarkunststoff in der Form von Partikeln, optional wobei das Verfahren vor dem Bilden des Granulats ferner ein Verarbeiten des Agrarkunststoffabfalls in der Form von Bahnen in die Partikel umfasst, vorzugsweise wobei die Partikel aus Agrarkunststoffabfall eine durchschnittliche Flockengröße von nicht mehr als ungefähr 80 mm aufweisen, und wobei der Begriff "ungefähr" bedeutet, dass eine Abweichung von ± 10% von dem explizit genannten Wert des Parameters umfasst ist.

11. Verfahren nach einem der Ansprüche 1 bis 10, umfassend, vor dem Verarbeiten, ein Bilden des agglomerierten Granulats aus Kunststoff-Aluminium-Laminatabfall.

12. Verfahren nach einem der Ansprüche 1 bis 11, umfassend ein Trocknen des agglomerierten Granulats aus Agrarkunststoffabfall und des agglomerierten Granulats aus Kunststoff-Aluminium-Laminatabfall vor dem Mischen, optional wobei der Wassergehalt in dem agglomerierten Granulat des Agrarkunststoffabfalls und dem agglomerierten Granulat des Kunststoff-Aluminium-Laminatabfalls ungefähr 5 Gew.-% vor dem Mischen nicht übersteigt, und wobei der Begriff "ungefähr" bedeutet, dass eine Abweichung von ± 10% von dem explizit genannten Wert des Parameters umfasst ist.

13. Verfahren nach einem der Ansprüche 1 bis 12, umfassend ein Trocknen der Mischung vor einem Einführen in den Extruder, optional wobei der Wassergehalt in der Mischung ungefähr 5 Gew.-% vor dem Einführen in den Extruder nicht übersteigt, und wobei der Begriff "ungefähr" bedeutet, dass eine Abweichung von ± 10% von dem explizit genannten Wert des Parameters umfasst ist.

14. Verfahren nach einem der Ansprüche 1 bis 13, wobei es der Schmelzmischung ermöglicht wird, an mehreren Orten, welche innerhalb der Form definiert sind, in die Form zu fließen, wobei die Form zwei oder mehr Formeingänge umfasst, welche dazu eingerichtet sind, die Schmelzmischung an wenigstens zwei verschiedenen Orten in die Form einzuführen, optional wobei die Form mit einer kanalisierenden Anordnung zum Kanalisieren der Schmelzmischung in die Form assoziiert ist.

15. Verfahren nach einem der Ansprüche 1 bis 14, wobei die geformten Kunststoffprodukte Schwerlastpaneele sind, optional wobei die eine oder die mehreren Formen eine Bodenformplatte und eine Deckelformplatte, welche dazu eingerichtet sind, die Schmelzmischung zwischen ihnen zu halten und umzuformen, und wobei, während des Ausübens des Drucks, die Deckelformplatte bei einer Temperatur gehalten wird, welche geringer als die der Bodenformplatte ist.

16. Verfahren nach einem der Ansprüche 1 bis 15, wobei der Agrarkunststoffabfall bis zu 15 Gew.-% des Gesamtgewichts des Agrarkunststoffabfalls nicht-organische Partikel umfasst.

17. Verfahren nach Anspruch 16, wobei der Agrarkunststoffabfall zwischen ungefähr 0,5 Gew.-% und ungefähr 10 Gew.-% des Gesamtgewichts des Agrarkunststoffabfalls nicht-organische Partikel umfasst.

## Revendications

1. Procédé pour produire des produits plastiques moulés, lesdits produits plastiques moulés comprenant une matrice polymère et des particules d'aluminium réparties dans ladite matrice polymère, le procédé comprenant :
le mélange de granulés agglomérés de déchets agroplastiques et de granulés agglomérés de déchets de stratifié plastique-aluminium pour former un mélange ;
le traitement dudit mélange dans une extrudeuse à double hélice obtenant un mélange fondu,
le fait de permettre au mélange fondu de s'écouler dans un ou plusieurs moules pour remplir au moins partiellement lesdits un ou plusieurs moules,
l'application d'une pression sur lesdits un ou plusieurs moules pour façonner le mélange fondu en un ou plusieurs produits plastiques façonnés, et
l'extraction desdits un ou plusieurs produits plastiques façonnés à partir desdits un ou moules pour obtenir lesdits produits plastiques moulés.

2. Procédé selon la revendication 1, dans lequel le mélange présente un débit massique à l'état fondu (MFR) d'au moins 2 fois celui du MFR des déchets agroplastiques.

3. Procédé selon la revendication 1 ou 2, dans lequel ledit mélange présente une valeur MFR d'au moins environ 3 g/10 min, mesurée selon la norme internationale ISO 1133-1 à 190°C, et dans lequel le terme « environ » est censé englober un écart de ± 10 % par rapport à la valeur spécifiquement mentionnée du paramètre.

4. Procédé selon l'une quelconque des revendications 1 à 3, dans lequel la pression appliquée sur lesdits un ou plusieurs moules est d'au moins environ 60 tonnes/kg, et dans lequel le terme « environ » est censé englober un écart de ± 10 % par rapport à la valeur spécifiquement mentionnée du paramètre.

5. Procédé selon l'une quelconque des revendications 1 à 4, dans lequel lesdits déchets agroplastiques comprennent du polyéthylène, du polypropylène, ou un mélange de ceux-ci, dans lequel facultativement lesdits déchets plastiques agroplastiques comprennent du polyéthylène basse densité (LDPE), du polyéthylène linéaire basse densité (LLDPE), du polyéthylène haute densité (HDPE), du polypropylène basse densité (LDPP) ou du polypropylène haute densité (HDPP), ou tout mélange, mélange homogène ou copolymère de ceux-ci.

6. Procédé selon la revendication 5, dans lequel lesdits déchets agroplastiques se présentent sous la forme de feuilles flexibles, facultativement dans lequel lesdits déchets agroplastiques comprennent en outre des tuyaux ou tubes en polyéthylène haute densité (HDPE).

7. Procédé selon la revendication 5 ou 6, dans lequel lesdits déchets agroplastiques comprennent du LDPE et du HDPE dans un rapport pondéral du LDPE au HDPE d'environ 40:60 et d'environ 60:40, et dans lequel le terme « environ » est censé englober un écart de ± 10 % par rapport à la valeur spécifiquement mentionnée du paramètre.

8. Procédé selon l'une quelconque des revendications 1 à 7, dans lequel le rapport pondéral desdits granulés agglomérés de déchets agroplastiques par rapport auxdits granulés agglomérés de déchets de stratifié plastique-aluminium dans le mélange est compris entre environ 85:15 et environ 50:50, facultativement dans lequel le rapport pondéral desdits granulés agglomérés de déchets agroplastiques par rapport auxdits granulés agglomérés de déchets de stratifié plastique-aluminium dans le mélange est compris entre environ 80:20 et environ 60:40, et dans lequel le terme « environ » est censé englober un écart de ± 10 % par rapport à la valeur spécifique du paramètre.

9. Procédé selon l'une quelconque des revendications 1 à 8, comprenant en outre l'ajout d'une ou plusieurs charges dans l'extrudeuse à double hélice pendant l'extrusion, dans lequel facultativement lesdites une ou plusieurs charges sont ajoutées en une quantité d'au plus 10 % en poids sur le poids total du mélange fondu, et dans lequel le terme « environ » est censé englober un écart de ± 10 % par rapport à la valeur spécifiquement mentionnée du paramètre.

10. Procédé selon l'une quelconque des revendications 1 à 9, comprenant, avant ledit mélange, la formation desdits granulés agglomérés de déchets agroplastiques à partir d'agroplastique sous forme de matière particulaire, facultativement dans lequel le procédé comprend en outre le traitement desdits déchets agroplastiques sous forme de feuilles en ladite matière particulaire avant la formation desdits granulés, de préférence dans lequel la matière particulaire de déchets agroplastiques ayant une taille moyenne en flocons n'excédant pas environ 80 mm, et dans lequel le terme « environ » est censé englober un écart de ± 10 % par rapport à la valeur spécifiquement mentionnée du paramètre.

11. Procédé selon l'une quelconque des revendications 1 à 10, comprenant, avant ledit traitement, la formation desdits granulés agglomérés de déchets de stratifié plastique-aluminium.

12. Procédé selon l'une quelconque des revendications 1 à 11, comprenant le séchage des granulés agglomérés de déchets agroplastiques et des granulés agglomérés de déchets de stratifié plastique-aluminium avant ledit mélange, dans lequel facultativement la teneur en eau dans les granulés agglomérés des déchets agroplastiques et les granulés agglomérés de déchets de stratifié plastique-aluminium ne dépasse pas environ 5 % en poids avant le mélange, et dans lequel le terme « environ » est censé englober un écart de ± 10 % par rapport à la valeur spécifiquement mentionnée du paramètre.

13. Procédé selon l'une quelconque des revendications 1 à 12, comprenant le séchage du mélange avant acheminement dans l'extrudeuse, facultativement dans lequel la teneur en eau dans le mélange ne dépasse pas environ 5 % en poids avant acheminement dans l'extrudeuse, et dans lequel le terme « environ » est censé englober un écart de ± 10 % par rapport à la valeur spécifiquement mentionnée du paramètre.

14. Procédé selon l'une quelconque des revendications 1 à 13, dans lequel le mélange fondu est autorisé à s'écouler dans le moule à plusieurs emplacements définis à l'intérieur du moule, le moule comprend deux entrées de moule ou plus configurées pour acheminer le mélange fondu dans le moule à au moins deux emplacements différents, facultativement dans lequel le moule est associé à un agencement de canalisation pour canaliser le mélange fondu dans le moule.

15. Procédé selon l'une quelconque des revendications 1 à 14, dans lequel les produits plastiques moulés sont des panneaux à usage intensif, dans lequel lesdits un ou plusieurs moules comprennent une plaque de moule inférieure et une plaque de moule supérieure configurées pour maintenir et façonner entre elles ledit mélange fondu, et dans lequel pendant ladite application de pression, la plaque de moule supérieure est maintenue à une température inférieure à celle de la plaque de moule inférieure.

16. Procédé selon l'une quelconque des revendications 1 à 15, dans lequel lesdits déchets agroplastiques comprennent jusqu'à 15 % en poids de matière particulaire non organique sur le poids total des déchets agroplastiques.

17. Procédé selon la revendication 16, dans lequel lesdits déchets agroplastiques comprennent entre environ 0,5 % en poids et environ 10 % en poids de matière particulaire non organique sur le poids total des déchets agroplastiques.
